Europäisches Patentamt

**European Patent Office**

Office européen des brevets

(11) Veröffentlichungsnummer: **0 175 965**
**B1**

(12) **EUROPÄISCHE PATENTSCHRIFT**

(45) Veröffentlichungstag der Patentschrift:
**20.04.88**

(21) Anmeldenummer: **85111065.0**

(22) Anmeldetag: **02.09.85**

(51) Int. Cl.⁴: **B 32 B 17/10, C 03 C 27/12,
E 04 B 1/10**

(54) **Lichtstreuende Isolierglasscheibe.**

(30) Priorität: **06.09.84 DE 3432761**

(43) Veröffentlichungstag der Anmeldung:
**02.04.86 Patentblatt 86/14**

(45) Bekanntmachung des Hinweises auf die Patenterteilung:
**20.04.88 Patentblatt 88/16**

(84) Benannte Vertragsstaaten:
**AT BE CH DE FR GB LI NL SE**

(56) Entgegenhaltungen:
**EP - A - 0 030 246
CH - A - 386 087
CH - A - 562 171
DE - A - 2 055 822
DE - A - 2 326 747
DE - B - 1 264 023
FR - A - 1 542 454
US - A - 4 046 951**

(73) Patentinhaber: **VEGLA Vereinigte Glaswerke GmbH,
Viktoriaallee 3-5, D-5100 Aachen (DE)**
Patentinhaber: **JMC Acrylguss GmbH & Co. KG,
Kronprinzenstrasse 11, D-5630 Remscheid (DE)**

(72) Erfinder: **Kunert, Heinz, Dr., Am Krieler Dom 23,
D-5000 Köln 41 (DE)**
Erfinder: **Jbach, Hermann-Wolf, Stockder Strasse 128,
D-5630 Remscheid (DE)**

(74) Vertreter: **Biermann, Wilhelm, Dr.-Ing., VEGLA Vereinigte
Glaswerke GmbH Viktoriaallee 3-5, D-5100 Aachen (DE)**

ACTORUM AG

# Beschreibung

Die Erfindung betrifft ein lichtstreuendes Isolierglas aus zwei Silikatglasscheiben und einer zwischen den Silikatglasscheiben angeordneten Zwischenschicht aus einem lichtdurchlässigen schaumartigen Kunststoff, die zur Erzielung einer splitterbindenden Wirkung mit den beiden Glasscheiben verklebt ist.

Ein Isolierglas mit diesem Aufbau ist aus der CH-A-368 087 bekannt. Aus dieser Druckschrift geht hervor, dass es zur Erzielung einer splitterbindenen Wirkung nützlich ist, dem Isolierglas eine erhöhte Steifigkeit zu verleihen, was sich durch die Verwendung von verhältnismässig dicken Glasscheiben für die Herstellung des Isolierglases erzielen lässt. Für die Zwischenschicht aus schaumartigem Kunststoff werden Schaumstoffe beispielsweise aus Polyurethan oder Polystyrol verwendet. Wegen ihrer geringen Transparenz haben diese Schichten jedoch eine sehr geringe Dicke. Diese bekannten Isoliergläser mit zwei verhältnismässig dicken Glasscheiben und einer verhältnismässig dünnen Zwischenschicht haben ein verhältnismässig hohes Gewicht, eine geringe Isolationswirkung und eine geringe Transparenz. Für den Einsatz beispielsweise als Dach- oder Deckenverglasung sind sie aufgrund dieser Eigenschaften nicht besonders geeignet.

Der Erfindung liegt die Aufgabe zugrunde, insbesondere für die Dach- und Deckenverglasung geeignete Isolierglasscheiben der genannten Art zu schaffen, die neben ihrer splitterbindenden Wirkung eine hohe Lichtdurchlässigkeit, gute lichtstreuende Eigenschaften und eine hohe Wärmedämmung aufweisen.

Gemäss der Erfindung wird diese Aufgabe dadurch gelöst, dass

— die beiden Silikatglasscheiben jeweils eine Dicke von 1 bis 3 mm aufweisen;

— die schaumartige Zwischenschicht eine Dicke von 10 bis 40 mm aufweist;

— die schaumartige Zwischenschicht aus aufgeschäumtem Acrylglas mit geschlossenen Blasen mit einem Durchmesser von 3 bis 8 mm besteht, das ein Raumgewicht von 20 bis 30 kg/m³ und eine Lichtdurchlässigkeit von 60 bis 80% bei einer Schichtdicke von 20 mm aufweist, und

— der die schaumartige Zwischenschicht mit den Silikatglasscheiben verbindende Kleber ein lösungsmittelfreier transparenter Kleber ist.

Die erfindungsgemässe Isolierglasscheibe weist einerseits ausgezeichnete Lichtstreu- und Isolationseigenschaften auf und hat darüberhinaus ein verhältnismässig geringes Gewicht. Ferner hat sie eine besonders gute mechanische Widerstandsfähigkeit, weil die Silikatglasscheiben in dieser dünnen Stärke ein hohes Mass an Elastizität aufweisen und in Verbindung mit dem genannten Schaummaterial ihre elastischen Eigenschaften voll beibehalten. Infolgedessen eignen sich solche Isolierglaseinheiten auch für solche Anwendungsfälle, für die Elemente mit dickeren Glasscheiben wegen ihrer geringeren mechanischen Belastbarkeit nicht infrage kommen. Besonders geeignet sind sie für die Verwendung als Überkopfverglasung sowie für andere Zwecke, für die bisher aus Sicherheitsgründen Drahtglas oder Verbundsicherheitsglas vorgeschrieben ist.

In Weiterbildung der Erfindung kann zwischen wenigstens einer Glasscheibe und der schaumartigen Zwischenschicht eine zusätzliche transparente Kunststoffschicht angeordnet sein, die sowohl mit der Glasscheibe als auch mit der schaumartigen Zwischenschicht verklebt ist.

Bevorzugte Ausführungsbeispiele der Erfindung werden anhand der Zeichnungen näher beschrieben. Von den Zeichnungen zeigt

Fig. 1 eine erste Ausführungsform des neuen Isolierglases mit symmetrischem Aufbau in einer detailperspektivischen vergrösserten Darstellung;

Fig. 2 die in Fig. 1 dargestellte Ausführungsform des neuen Isolierglases als Schnittdarstellung;

Fig. 3 eine Ausführungsform mit dem in Fig. 1 und 2 dargestellten Aufbau, jedoch mit einer umlaufenden Randversiegelung;

Fig. 4 eine Ausführungsform mit asymmetrischem Aufbau, bei der ein zusätzliche splitterbindende Kunststoffschicht auf einer der Glasscheiben angeordnet ist, und

Fig. 5 eine weitere Ausführungsform mit symmetrischem Aufbau, bei der jede Glasscheibe mit einer zusätzlichen splitterbindenden Kunststoffschicht versehen ist.

Bei allen dargestellten Ausführungsformen bestehen die Silikatglasscheiben 1, 2, die die Deckscheiben des Isolierglaselementes bilden, aus sehr dünnem Flachglas, das eine Dicke von nur 1 bis 3 mm, und vorzugsweise etwa 1,5 bis 2 mm aufweist, und die Zwischenschicht 3 besteht aus einem Lichtdurchlässigen Acrylglasschaum mit geschlossenen Blasen, deren Durchmesser 3 bis 8 mm, und vorzugsweise 4 bis 6 mm beträgt. Die die Blasen 3' des Schaums bildenden Wände 3'' sind ausserordentlich dünn und haben eine Wandstärke von etwa 30 bis 80 Mikrometer. Infolge dieses Aufbaus hat ein Acrylschaum dieser Art je nach Grösse der Blasen ein Raumgewicht zwischen 20 und 30 kg/m³. Eine Schaumplatte dieser Art mit einer Dicke von beispielsweise 16 mm hat ein Gewicht von etwa 0,4 bis 0,5 kg/m². Da die Silikatglasscheiben 1,2 wegen ihrer sehr geringen Dicke jeweils ein Gewicht von nur etwa 5 kg/m² aufweisen, hat das gesamte Isolierglaselement ein Gewicht von nur etwa 11 bis 12 kg/m². Es hat mithin ein geringeres Gewicht als beispielsweise eine monolithische Glasscheibe von 5 mm Dicke.

Die Zwischenschicht 3 kann je nach dem gewünschten Wärmedämmwert des Isolierglases eine Dicke zwischen 10 und 40 mm aufweisen. Für die meisten Anwendungsfälle genügen schaumartige Zwischenschichten mit einer Dicke von etwa 15 bis 20 mm.

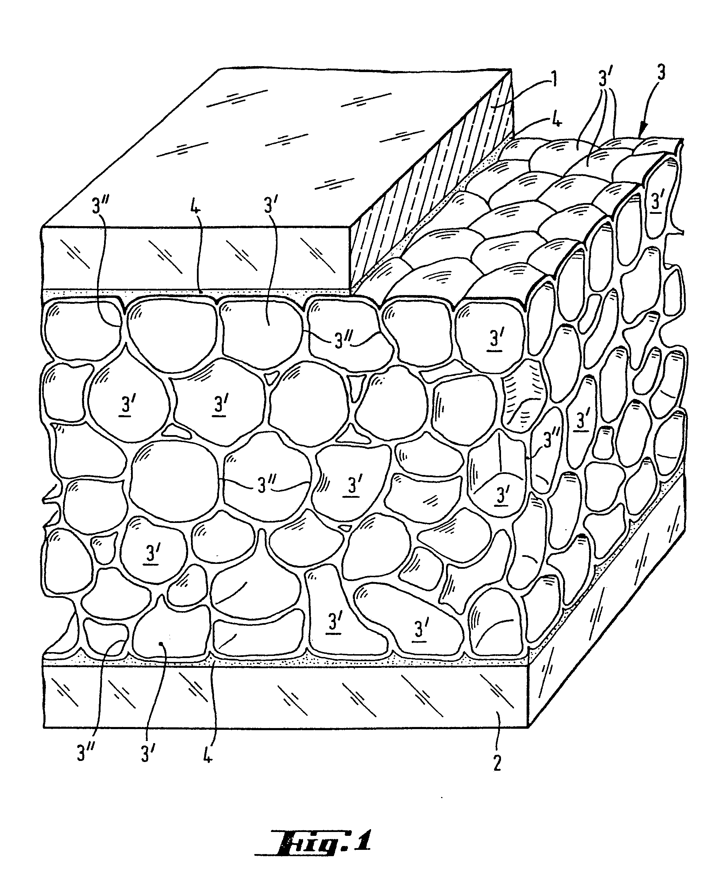

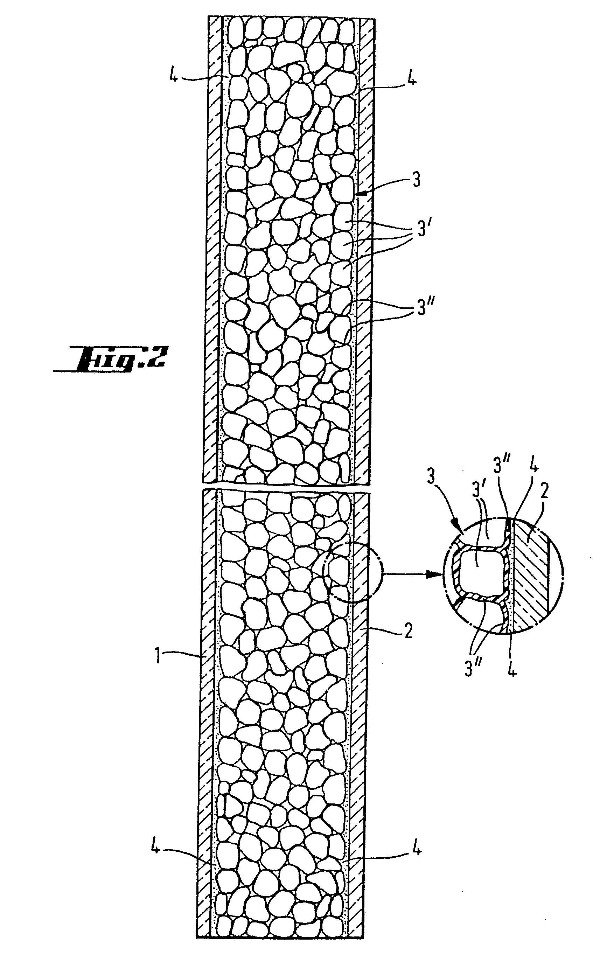

Bei dem in Fig. 1 und 2 dargestellten Isolierglaselement sind die beiden Silikatglasscheiben 1,2 unmittelbar mit der schaumartigen Zwischenschicht 3 aus Acrylglas ganzflächig verklebt. Die Verklebung erfolgt über Kleberschichten 4. Bei den Kleberschichten 4 kann es sich um bekannte und übliche lösungsmittelfreie Kleber handeln, die sich zum Verkleben von Silikatglas mit Acrylschaum eignen. Beispielsweise können transparente thermoplastische Kleber oder transparente Zweikomponenten-Polyurethan-Kleber verwendet werden. Die Kleber werden zweckmässigerweise in einer dünnen Schicht auf die Glasscheiben 1,2 aufgetragen, beispielsweise aufgegossen oder aufgespritzt, und unter Anwendung von Druck und gegebenenfalls von Wärme werden die beschichteten Glasscheiben 1,2 mit der schaumartigen Zwischenschicht 3 verbunden.

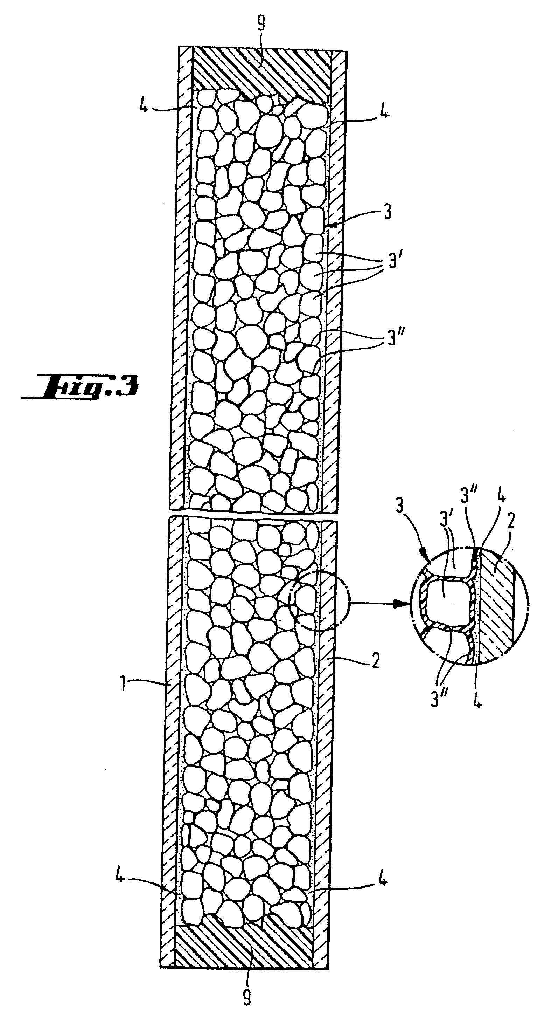

Die in Fig. 3 dargestellte Isolierglasscheibe hat grundsätzlich den gleichen Aufbau wie das anhand der Fig. 1 und 2 beschriebene Element, das heisst, es besteht aus den beiden Silikatglasscheiben 1 und 2, die mit Hilfe von Kleberschichten 4 mit der Zwischenschicht 3 aus Acrylschaum verklebt sind. Die Zwischenschicht 3 hat jedoch kleinere Abmessungen als die Glasscheiben 1,2. Auf diese Weise wird am Rand eine umlaufende Fuge zwischen den Glasscheiben gebildet, und diese Fuge ist mit einer wasserdampfdichten Versiegelungsmasse 9 ausgefüllt. Eine solche Randversiegelung kann in bestimmten Anwendungsfällen zweckmässig sein.

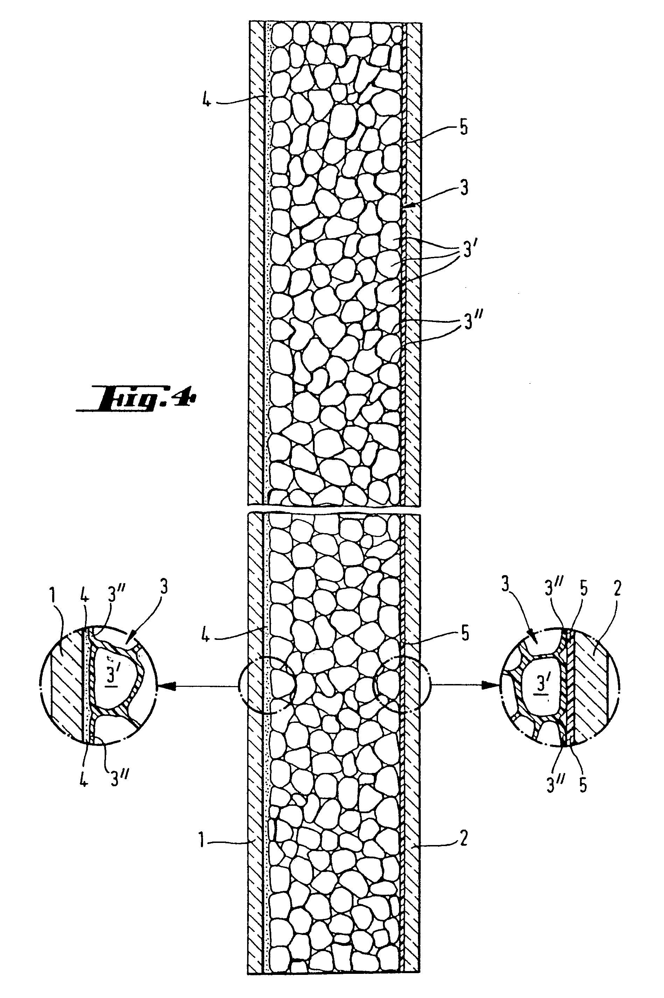

Das in Fig. 4 dargestellte Isolierglaselement besteht wiederum aus den beiden Deckscheiben 1,2 aus etwa 2 mm dickem Silikatglas und einer etwa 20 mm dicken Zwischenschicht aus Acrylschaum. Die Silikatglasscheibe 1 ist mittels einer dünnen Kleberschicht 4 unmittelbar mit der Zwischenschicht 3 aus Acrylschaum verklebt. Mit der Silikatglasscheibe 2 ist eine transparente Kunststoffschicht 5 verklebt. Diese Kunststoffschicht 5 kann aus einem Zweikomponenten-Reaktions-Giessharz, beispielsweise einem transparenten Zweikomponenten-Polyurethan-Giessharz oder einem anderen bekannten Kunstharz bestehen, das nach dem Aushärten die erforderlichen splitterbindenden Eigenschaften aufweist. Die Kunststoffschicht 5 kann auch in Form einer Folie aus einem thermoplastischen Kunststoff auf die Glasscheibe 2 aufgelegt und durch Anwendung von Wärme und Druck mit der Glasscheibe 2 verbunden werden. Ausser mit der Glasscheibe 2 ist die Kunststoffschicht 5 auch mit der Zwischenschicht 3 verklebt, so dass die einzelnen Schichten 1 bis 5 miteinander zu einem Sandwichelement ganzflächig verklebt sind.

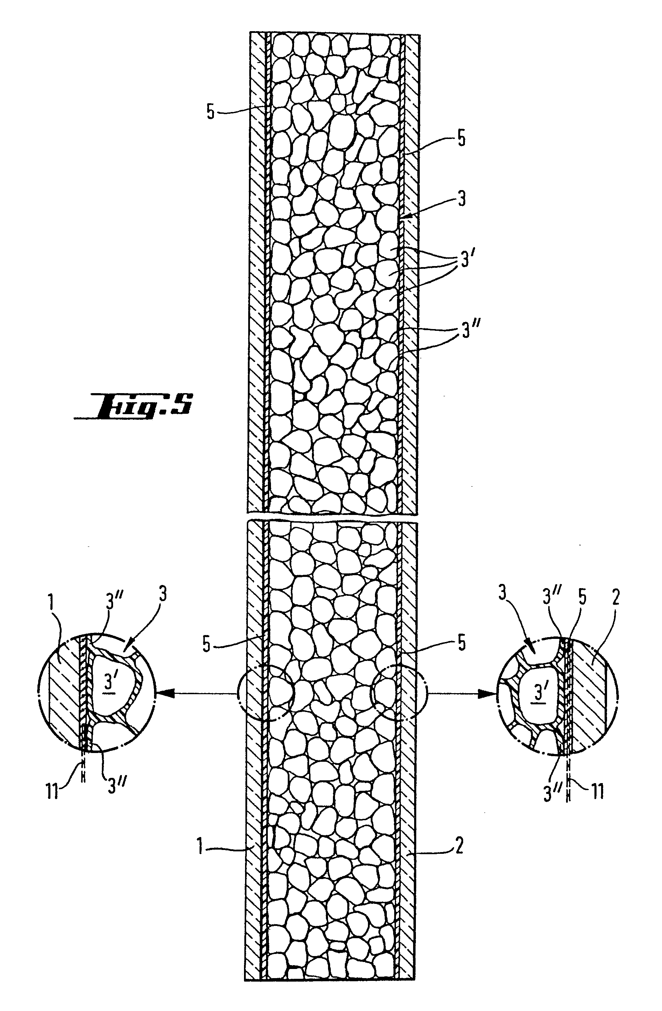

In Fig. 5 ist ein Isolierglaselement dargestellt, bei dem sowohl die Glasscheibe 2 als auch die Glasscheibe 1 jeweils auf ihrer Innerseite mit einer separaten splitterbindenden Kunststoffschicht 5 verbunden sind. Im übrigen ist dieses Isolierglaselement wie die zuvor beschriebenen Isolierglaselemente aufgebaut, indem die einzelnen Schichten 1,2,3 und 5 ganzflächig miteinander verklebt sind. Wahlweise ist in diesem Fall in beide Kunststoffschichten 5 jeweils ein grobmaschiges Netz 1 aus einem textilen Gewebe oder aus einem Glasfasergespinst eingelegt, wodurch sowohl die Splitterbindung gegebenenfalls weiter verbessert als auch ausserdem eine günstige optische und lichtstreuende Wirkung erzielt wird. Ebenso wie bei den zuvor beschriebenen Ausführungsbeispielen ist eine besondere Abdichtung am Rand des Elementes nicht notwendig, da eventuell in die Zwischenschicht 3 eindiffundierender Wasserdampf die Transparenz des Isolierglaselements nicht beeinträchtigt. In Abhängigkeit von der Umgebungstemperatur und der Luftfeuchtigkeit diffundiert und durch den Rand eingedrungener Wasserdampf wieder nach aussen.

Bei allen Ausführungsformen der Erfindung kann zur weiteren Verbesserung der splitterbindenden Wirkung auch bei sehr dünnen Kleberschichten in diese Kleberschicht ein grobmaschiges Netz, Gewebe oder Gespinst aus einem textilen Material oder aus Glasfasern, beispielsweise ein Netz aus dünnen Nylon- oder Perlonfäden, eingelegt werden, das mit Hilfe des Klebers mit der Glasoberfläche verklebt wird, wie es bereits anhand der Fig. 5 beschrieben wurde.

### Patentansprüche

1. Lichtstreuendes Isolierglas aus zwei Silikatglasscheiben und einer zwischen den Silikatglasscheiben angeordneten Zwischenschicht aus einem lichtdurchlässigen schaumartigen Kunststoff, die zur Erzielung einer splitterbindenden Wirkung mit den beiden Glasscheiben verklebt ist, dadurch gekennzeichnet, dass

— die beiden Silikatglasscheiben jeweils eine Dicke von 1 bis 3 mm aufweisen;

— die schaumartige Zwischenschicht eine Dicke von 10 bis 40 mm aufweist;

— die schaumartige Zwischenschicht aus aufgeschäumtem Acrylglas mit geschlossenen Blasen mit einem Durchmesser von 3 bis 8 mm besteht, das ein Raumgewicht von 20 bis 30 kg/m$^3$ und eine Lichtdurchlässigkeit von 60 bis 80% bei einer Schichtdicke von 20 mm aufweist, und

— der die schaumartige Zwischenschicht mit den Silikatglasscheiben verbindende Kleber ein lösungsmittelfreier transparenter Kleber ist.

2. Lichtstreuendes Isolierglas nach Anspruch 1, dadurch gekennzeichnet, dass die beiden Silikatglasscheiben jeweils eine Dicke von etwa 2 mm aufweisen.

3. Lichtstreuendes Isolierglas nach Anspruch 1 oder 2, dadurch gekennzeichnet, dass die schaumartige Zwischenschicht aus aufgeschäumtem Acrylglas eine Dicke von 15 bis 20 mm aufweist.

4. Lichtstreuendes Isolierglas nach einem der Ansprüche 1 bis 3, dadurch gekennzeichnet, dass die schaumartige Zwischenschicht kleinere Flächenabmessungen als die Glasscheiben (1,2) aufweist, und in der so gebildeten Randfuge eine Randversiegelungsmasse angeordnet ist.

5. Lichtstreuendes Isolierglas nach Anspruch 4, dadurch gekennzeichnet, dass in der Randfuge zwischen der Randversiegelungsmasse und der schaumartigen Zwischenschicht ein metallischer Abstandsrahmen vorgesehen ist.

6. Lichtstreuendes Isolierglas nach einem der Ansprüche 1 bis 5, dadurch gekennzeichnet, dass auf der inneren Oberfläche wenigstens einer Glasscheibe (1) eine teilreflektierende Beschichtung (6), oder eine mit einer solchen Beschichtung (6) versehene Kunststoffolie angeordnet ist.

7. Lichtstreuendes Isolierglas nach einem oder mehreren der Ansprüche 1 bis 6, dadurch gekennzeichnet, dass zwischen wenigstens einer Glasscheibe (1,2) und der schaumartigen Zwischenschicht (3) eine zusätzliche transparente Kunststoffschicht (5) angeordnet und sowohl mit der Glasscheibe (1,2) als auch mit der schaumartigen Zwischenschicht (3) verklebt ist.

8. Lichtstreuendes Isolierglas nach Anspruch 7, dadurch gekennzeichnet, dass in der transparenten Kunststoffschicht (5) ein grobmaschiges Netz aus reissfesten Textilfasern angeordnet ist.

## Claims

1. A light dispersing insulating glass member composed of two silicate glass plates and an intermediate layer, arranged between the silicate glass plates, of transparent sponge-like plastic material, which is bonded to the two glass plates in order to produce a splinter binding effect characterized in that
— the two silicate glass plates each have a thickness of 1 to 3 mm;
— the sponge-like intermediate layer has a thickness of 10 to 40 mm;
— the sponge-like layer consists of foamed acrylic glass with closed pores having a diameter of 3 to 8 mm, with a bulk density of 20 to 30 kg/cu. meter and with transparency of 60 to 80% at a layer thickness of 20 mm; and
— the adhesive bonding the sponge-like intermediate layer to the silicate plates is a solvent-free transparent adhesive.

2. The light dispersing insulating glass member as claimed in claim 1 characterized in that the two silicate glass plates each have a thickness of approximately 2 mm.

3. The light dispersing insulating glass member as claimed in claim 1 or claim 2 characterized in that the sponge-like intermediate layer of foamed acrylic glass has a thickness of 15 to 20 mm.

4. The light dispersing insulating glass member as claimed in any one of the claims 1 through 3 characterized in that the sponge-like intermediate layer has smaller surface dimensions than the glass plates (1 and 2) and the edge gap so formed has a marginal sealant placed therein.

5. The light dispersing insulating glass member as claimed in claim 4 characterized in that the edge gap contains a metallic spacing strip between the marginal sealant and the sponge-like intermediate layer.

6. The light dispersing insulating glass member as claimed in any one of the claims 1 through 5 characterized by a partly reflecting coating (6) or a plastic film provided with such a coating (6) arranged on the inner face of at least one glass plate (1).

7. The light dispersing glass member as claimed in any one or more of the claims 1 through 6 characterized by an additional transparent plastic layer (5) arranged between at least one glass plate (1 and 2) and the sponge-like intermediate layer (3) and bonded both to the glass plate (1 and 2) and also with the sponge-like intermediate layer (3).

8. The light dispersing insulating glass member as claimed in claim 7 characterized by coarse-mesh netting of tear resistant textile fiber in the transparent plastic layer (5).

## Revendications

1. Verre isolant diffusant la lumière, formé de deux feuilles de verre de silicate et d'une couche intermédiaire faite d'une matière plastique mousseuse translucide agencée entre les feuilles de verre de silicate et qui est collée aux deux feuilles de verre pour exercer un effet antiéclats, caractérisé en ce que:
— les deux feuilles de verre de silicate présentent chacune une épaisseur de 1 à 3 mm,
— la couche intermédiaire mousseuse présente une épaisseur de 10 à 40 mm,
— la couche intermédiaire mousseuse consiste en verre acrylique expansé à cellules fermées d'un diamètre de 3 à 8 mm, qui présente une masse volumique de 20 à 30 kg/m$^3$ et une perméabilité à la lumière de 60 à 80% pour une épaisseur de couche de 20 mm, et
— la colle assemblant la couche intermédiaire mousseuse aux feuilles de verre de silicate est une colle transparente exempte de solvant.

2. Verre isolant diffusant la lumière suivant la revendication 1, caractérisé en ce que les deux feuilles de verre de silicate présentent chacune une épaisseur d'environ 2 mm.

3. Verre isolant diffusant la lumière suivant la revendication 1 ou 2, caractérisé en ce que la couche intermédiaire mousseuse de verre acrylique expansé présente une épaisseur de 15 à 20 mm.

4. Verre isolant diffusant la lumière suivant l'une quelconque des revendications 1 à 3, caractérisé en ce que la couche intermédiaire présente des dimensions en étendue inférieures à celles des feuilles de verre (1,2) et une masse de scellement périphérique est disposée dans le joint périphérique ainsi formé.

5. Verre isolant diffusant la lumière suivant la revendication 4, caractérisé en ce qu'un cadre d'espacement métallique est prévu dans le joint périphérique entre la masse de scellement périphérique et la couche intermédiaire mousseuse.

6. Verre isolant diffusant la lumière suivant l'une quelconque des revendications 1 à 5, caractérisé en ce qu'un revêtement (6) semi-réfléchissant ou une pellicule de matière plastique munie d'un tel revêtement (6) est appliqué sur la face intérieure d'au moins une feuille de verre (1).

7. Verre isolant diffusant la lumière suivant une ou plusieurs des revendications 1 à 6, caractérisé en ce qu'une couche de matière plastique transparente supplémentaire (5) est disposée entre au moins une feuille de verre (1,2) et la couche intermédiaire mousseuse (3) et est collée tant à la feuille de verre (1,2) qu'à la couche intermédiaire mousseuse (3).

8. Verre isolant diffusant la lumière suivant la revendication 7, caractérisé en ce qu'un filet à grosses mailles en fibres textiles résistant à la traction est disposé dans la couche de matière plastique transpa-rente (5).

**Fig.1**

**Fig.2**

*Fig.3*

Fig.4

Fig.5